# EUROPÄISCHE PATENTSCHRIFT

(11) **EP 2 033 061 B1**
(45) Veröffentlichungstag und Bekanntmachung des Hinweises auf die Patenterteilung: **16.04.2014**
(21) Anmeldenummer: 07718468.7
(22) Anmeldetag: 29.05.2007
(51) Int. Cl.: G05D 13/62

(54) **VORRICHTUNG ZUM MESSEN UND REGELN DER DREHZAHL EINER ROTIERENDEN MECHANISCHEN WELLE**
DEVICE FOR MEASURING AND REGULATING THE ROTATIONAL SPEED OF A ROTATING MECHANICAL SHAFT
DISPOSITIF DE MESURE ET DE REGULATION DE LA VITESSE DE ROTATION D'UN ARBRE MECANIQUE ENTRAINE EN ROTATION

(30) Priorität: 26.05.2006 AT 9142006
(43) Veröffentlichungstag der Anmeldung: 11.03.2009
(73) Patentinhaber: Lunatone Industrielle Elektronik GmbH, 1220 Wien (AT)
(72) Erfinder: MAIR, Alexander, 2285 Breitstetten (AT); ROHNER, Daniel, 1060 Wien (AT); ERTL, Hans, 5270 Mauerkirchen (AT)
(74) Vertreter: Forsthuber, Martin
(86) Internationale Anmeldenummer: PCT/AT2007/000257
(87) Internationale Veröffentlichungsnummer: WO 2007/137317

(56) Entgegenhaltungen:
- WO-A-2005/019070
- DE-A1- 2 945 864
- DE-A1-102004 032 005
- US-A1- 2003 168 316

## Beschreibung

Die Erfindung bezieht sich auf eine Vorrichtung zum Messen und Regeln der Drehzahl einer rotierenden mechanischen Welle, an welche ein elektrodynamischer Generator gekoppelt ist.

Bei vielen Maschinen und Anlagen der industriellen Produktionstechnik wird hergestelltes bzw. zu verarbeitendes Gut, wie Folien oder Fäden, oder aber Transportgut, welches zur Beförderung eines Werkstückes dienen kann, über Rollen geführt, welche über kein eigenes "aktives" Antriebssystem verfügen, sondern die "passiv", also durch das Herstellungsgut bzw. das Transportband bewegt, mitlaufen. Dabei kommt es of zu unerwünschten Schwankungen der Drehzahl, da zum Bespiel ein Transportband mit einer Rolle ein schwingfähiges System bildet. Aus diesem Grunde ist es notwendig bzw. wäre es für eine optimale Prozessführung vorteilhaft, die Rolle mit einer definierten mechanischen Drehzahl-/Drehmoment-Charakteristik auszustatten, welche solchen unerwünschten Drehzahlschwankungen entgegen wirkt. Ebenso ist es bei manchen Anwendungen wünschenswert, ein Belastungsmoment für die beispielsweise ein Rolle tragende Welle vorgeben zu können, um etwa ein größeres Durchgängen des Transportgutes zu vermeiden.

DE 10 2004 03 2005 offenbart eine Vorrichtung zum Messen und Regeln der Drehzahl einer rotierenden mechanischen Welle.

Bei bekannten Vorrichtungen sind Rollen bzw. die zugehörigen Wellen ohne eigenen Antrieb daher vielfach mit Reibungsdämpfern ausgestattet, welche eine mechanische Grundlast bzw. eine von der Drehzahl unabhängige Zusatzlast darstellen. Solche sind einfach und kostengünstig herzustellen und arbeiten auch ohne jegliche Hilfsenergie, doch ist ihre Wirkung in Hinblick auf das Unterdrücken unerwünschter Drehzahlschwankungen oft nur eingeschränkt. Ein dynamisch hochwertiges Führen des Drehmoments in Abhängigkeit von der Drehzahl, ein programmierbares Ein- bzw. Verstellen der Drehzahl-/Drehmoment-Charakteristik oder auch deren adaptive Anpassung an variierende Lastparameter ist nicht möglich.

Solche hochwertigen Lösungen können dadurch erreicht werden, dass die Welle mit einem eigenen, hochdynamischen Antriebssystem, wie z. B einer Umrichter geregelten Asynchronmaschine, ausgestattet wird, das ausschließlich zum Aufbringen eines definierten, drehzahlabhängigen Drehmoments verwendet wird. Solche Lösungen sind allerdings sehr teuer, besonders natürlich bei Verarbeitungsmaschinen mit einer Vielzahl passiver Wellen, und daher nur in Sonderfällen wirtschaftlich vertretbar. Außer den Gerätekosten sind hier vor allem der Verdrahtungsaufwand für Motoren und Sensoren, die Reduktion der Zuverlässigkeit bei einem Umrichterausfall oder einem Kabelbruch wie auch die Probleme der elektromagnetischen Verträglichkeit nachteilig. Besondere Schwierigkeiten treten zudem dann auf, wenn die Welle in der Anlage keine feste Position hat, wie dies beispielsweise bei einer Tänzerrolle der Fall ist. Zur Energieversorgung und zur Informationsübertragung zwischen Umrichter und Motor sind dann hochflexible Schleppkabel notwendig, die wiederum sehr störungsanfällig sein können. Eine Kabelübertragung kann aber auch gänzlich unmöglich werden, etwa wenn sich die passive Welle innerhalb der Maschine völlig frei bewegen muss, wie dies z. B bei einer Welle auf einem sich bewegenden bzw. drehenden Schlitten der Fall ist.

Eine Aufgabe der Erfindung liegt daher darin, eine aktive Vorrichtung zu Messen und Regeln der Drehzahl einer rotierenden mechanischen Welle zu schaffen, welche ein dynamisch hochwertiges, drehzahlabhängiges Aufbringen eines Drehmoments auf die Welle ermöglicht, jedoch völlig autark arbeitet, das heißt keine Kabel zu einem Steuergerät und ebenso keine externe Hilfsenergie benötigt.

Die Aufgabe wird mit einer Vorrichtung der eingangs genannten Art gelöst, bei welcher erfindungsgemäß der Generator eine über ein Steuersignal einer elektronischen Rechenschaltung steuerbare, variable elektrische Last speist, wobei der Wert der Last von der Rechenschaltung in Abhängigkeit von der Drehzahl programmgesteuert so vorgegeben wird, dass sich an der Welle eine festlegbare Drehzahl-/Drehmoment-Charakteristik einstellt, und der Generator weiters unter Zwischenschaltung einer Gleichrichtereinheit einen elektrischen Energiespeicher speist, welcher die Vorrichtung mit elektrischer Energie versorgt.

Die erfindungsgemäße Vorrichtung kann vollständig autark und wartungsfrei arbeiten, denn eine galvanische Verbindung zu einer elektrischen Energiequelle ist nicht erforderlich.

Zweckmäßigerweise kann zum Erfassen der Drehzahl der Welle ein Drehzahlsensor vorgesehen sein, doch kann in vielen Fällen alternativ auch die Drehzahl der Welle von der Ausgangsspannung des Generators abgeleitet sein.

Vorteilhaft ist es, wenn die elektronisch steuerbare Last parallel zu dem Ausgang des Generators und/oder parallel zu dem Energiespeicher geschaltet ist. Eine entsprechende Wahl wird man in Abhängigkeit von der Ausgangsspannung des Generators und/oder den dynamischen Verhältnissen treffen.

Vorteilhafterweise ist zwischen Gleichrichtereinheit und Energiespeicher ein DC/DC-Schaltwandler angeordnet, besonders dann, wenn die Generatorausgangsspannung sehr gering ist und man eine höhere Spannung für die Versorgung des Energiespeichers bzw. der Rechenschaltung benötigt. Insbesondere ist der DC/DC-Schaltwandler zweckmäßigerweise als Hochsetzsteller ausgebildet.

Alternativ kann vorgesehen sein, dass die Ausgangsklemmen des Generators über einen gesteuerten bidirektionalen elektronischen Schalter miteinander verbindbar sind, sodass durch periodisches Kurzschließen des Generators über diesen Schalter in Verbindung mit der inneren Induktivität des Generators im Sinne eines Hochsetzstellers ein Anheben der Generator-Ausgangsspannung für den Energiespeicher erreichbar ist.

Bei einer zweckmäßigen Variante ist auch eine Sendeeinrichtung vorgesehen, deren Energieversorgung aus dem Energiespeicher erfolgt und welcher Signale der Rechenschaltung zur drahtlosen Übermittlung an eine auswertende ferne Empfangseinrichtung zugeführt sind. Auf diese Weise können Informationen, z. B über die Drehzahl der Welle, einem übergeordneten Steuergerät zur Verfügung gestellt werden.

Andererseits kann mit Vorteil auch eine Empfangseinrichtung vorgesehen sein, wobei von dieser empfangene Signale der Rechenschaltung zuführbar sind. Auf diese Weise kann beispielsweise ein übergeordnetes Steuergerät entsprechende Befehle zur Anpassung der Drehzahl-/Drehmoment-Charakteristik an die Vorrichtung übermitteln.

Letztlich kann in Kombination der beiden zuletzt genannten Möglichkeiten eine Sende-Empfangseinrichtung vorgesehen sein.

Die Erfindung samt weiteren Vorteilen ist im Folgenden anhand beispielsweiser Ausführungsformen näher erläutert, die in der Zeichnung veranschaulicht sind. In dieser zeigen
Fig. 1 in einem vereinfachten schematischen Blockschaltbild eine Vorrichtung nach der Erfindung,
Fig. 2 in einer Ansicht entsprechend Fig. 1 eine Variante der Erfindung unter Verwendung eines Hochsetzstellers,
Fig. 3 wiederum in einer Ansicht entsprechend Fig. 1 und Fig. 2 eine Variante unter Verwendung eines gesteuerten bidirektionalen Schalters,
Fig. 4 eine Vorrichtung nach der Erfindung in teilweiser Darstellung in einem Blockschaltbild mit einer Sendeeinrichtung und einer fernen Empfangseinrichtung und
Fig. 5 in einer Darstellung entsprechen Fig. 4 eine Variante der Erfindung mit einer Sende-Empfangseinrichtung.

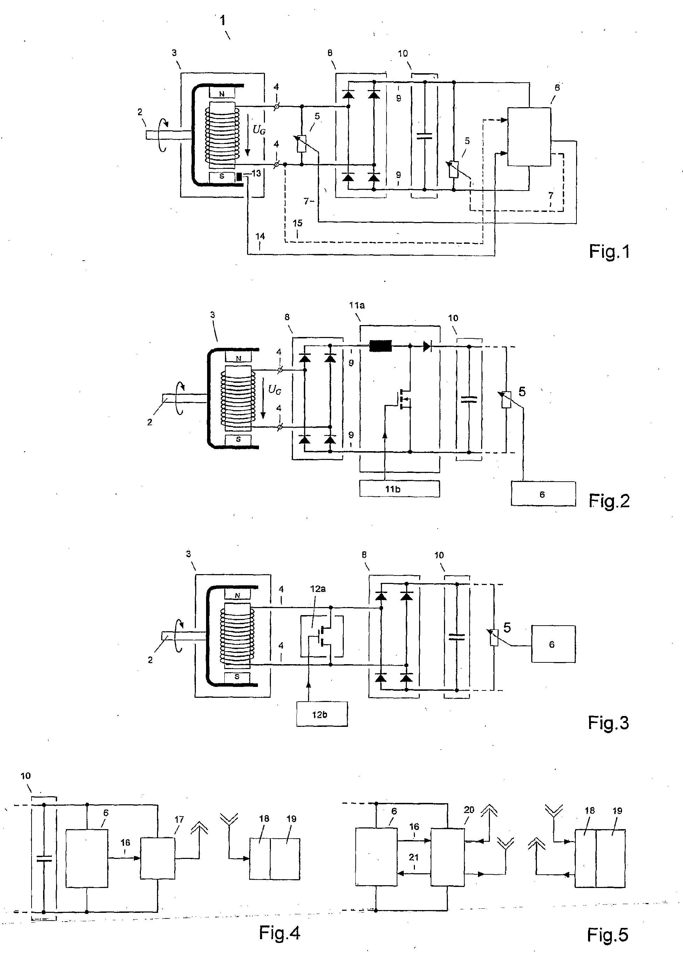

Wie in Fig. 1 dargestellt, ist bei einer Vorrichtung 1 gemäß der Erfindung an eine Welle 2 ein elektrodynamischer Generator 3 gekoppelt. Bei der gezeigten Ausführungsform besitzt der Rotor beispielsweise, durch die Buchstaben N und S symbolisierte, starke, Permanentmagnete, welche in einer Statorwicklung des Generators 3 selbst bei geringen Drehzahlen bereits eine nennenswerte Ausgangsspannung U_{G} an den Ausgangsklemmen 4 des Generators 3 erzeugen.

Bei der gezeigten Ausführungsform nach Fig. 1 ist an die Ausgangsklemmen 4 des Generators eine steuerbare variable elektrische Last 5 angeschlossen. Die Steuerung der Last erfolgt von einer elektronischen Rechenschaltung 6 über ein Steuersignal 7, wodurch bewirkt wird, dass je nach Ansteuerung der Last 5 ein entsprechender Strom durch die Last fließt, was in der Folge zu einem definierten Lastmoment an der Welle 2 führt. Um eine dynamisch hochwertige Drehzahl-/Drehmoment-Charakteristik zu realisieren, erfolgt die Vorgabe des Widerstandswertes der variablen Last 5 programmgesteuert in Abhängigkeit von der Drehzahl der Welle 2 gemäß einer in der Rechenschaltung 6 hinterlegten Vorschrift.

Für die Ausführung der variablen elektrischen Last stehen dem Fachmann sowohl digitale als auch analoge Lösungen zur Verfügung. So kann ein ohmscher Widerstand festgelegten Wertes verwendet werden, der über einen gesteuerten Schalter betrieben wird. Das Tastverhältnis der Ansteuerung dieses Schalters, die von der Rechenschaltung 6 aus erfolgt, bestimmt dann zusammen mit dem Widerstandswert des ohmschen Widerstandes die aktuelle Größe der Last. Zumindest ein Teil des ohmschen Widerstandes kann auch von dem Innenwiderstand des Generators realisiert sein. Als analoge Lösung bietet sich beispielsweise ein MOSFET-Transistor an, dessen Gate durch ein entsprechendes Signal der Rechenschaltung 6 angesteuert wird, wobei die Source-Drain Strecke einen variablen Widerstand bzw. die variable elektrische Last bildet.

Um der Rechenschaltung 6 Information über die Drehzahl zu geben, ist bei diesem Ausführungsbeispiel ein Drehzahlsensor 13 vorgesehen, welcher die Drehbewegung der Welle 2 unmittelbar erfasst und die zugehörige Information über eine Leitung 14 an die Rechenschaltung 6 liefert. Alternativ kann die Drehzahl der Welle 2 auch von der Ausgangsspannung U_{G} des Generators 3 abgeleitet werden, nämlich aus Zeitverlauf bzw. Frequenz der an den Klemmen 4 liegenden Ausgangsspannung, die, wie durch eine strichlierte Leitung 15 angedeutet, der Rechenschaltung 6 zugeführt wird. Das für die Steuerung der Last erforderliche Steuersignal 7 wird von der Rechenschaltung 6 der variablen Last 5 zugeführt. Zur Energieversorgung wird die an den Anschlussklemmen 4 liegende ein- oder mehrphasige Ausgangsspannung U_{G} des Generators mit Hilfe einer Gleichrichtereinheit 8 gleichgerichtet und anschließend einem elektrischen Energiespeicher 10, z. B einem Kondensator, basierend auf Folien-, Elektrolyt- oder Superkondensator-Technologie zugeführt, welcher die gesamte Vorrichtung 1 mit elektrischer Energie versorgt. Dabei kann es vorteilhaft sein, wenn alle elektronischen Systeme der Vorrichtung 1 im inaktiven Zustand selbstständig in einen Ruhebetrieb (Power-Down-Mode) versetzt werden, z. B bei Stillstand einer Anlage, weil der Energiespeicher 10 dann natürlich ein längeres Zeitintervall überbrückten kann. Dadurch ist auch bei einer sehr geringen Drehzahl der Welle 2, etwa bei einem Beschleunigungsvorgang aus dem Stillstand heraus, sicher gestellt, das der Energiespeicher 10 genügend Spannung zur Verfügung stellt, um beispielsweise einen Mess- bzw. Arbeitszyklus durchführen zu können.

Wie weiters aus Fig. 1 ersichtlich, kann die variable steuerbare Last 5 auch unter völliger Beibehaltung ihrer Funktion zusätzlich oder alternativ parallel zu dem Energiespeicher 10 geschaltet sein.

Die Mindestdrehzahl der Welle 2, die für einen Dauerbetrieb bzw. für eine Energieversorgung erforderlich ist, kann reduziert werden, wenn ein zusätzlicher DC/DC-Wandler 11a verwendet wird, der zwischen Gleichrichtereinheit 8 und Energiespeicher 10 angeordnet ist. Ein solcher Gleichspannungs-/Gleichspannungswandler wird beispielsweise als Hochsetzsteller aufgeführt und ist in der Ausführung nach Fig. 2 schematisch gezeigt. Ein nicht näher bezeichneter gesteuerter Schalter dieses Hochsetzstellers wird von einer Ansteuerschaltung 11b angesteuert. Dabei steht auch bei geringer Generator-Ausgangsspannung U_{G} am Energiespeicher 10 immer eine für die Versorgung der Rechenschaltung 6 und weiterer Schaltungsteile der Vorrichtung 1 erforderliche Spannung zur Verfügung.

Unter Bezugnahme auf Fig. 3 ist gezeigt, dass alternativ zur Verwendung eines eigenen Hochsetzstellers auch ein bidirektionaler gesteuerter elektronischer Schalter 12a vorgesehen sein kann, welcher von einer Ansteuerschaltung 12b angesteuert wird. Der Schalter kann die Ausgangsklemmen 4 des Generators 3 miteinander verbinden, sodass durch periodisches Kurzschließen des Generators 3 mit Hilfe dieses Schalters 12a in Verbindung mit der inneren Induktivität des Generators im Sinne eines Hochsetzstellers ein Anheben der GeneratorAusgangsspannung für den Energiespeicher 10 erreichbar ist. Die innere Induktivität des Generators 3 übernimmt dabei die Funktion der Glättungsdrossel eines Hochsetzstellers und die Dioden der Gleichrichtereinheit 8 dienen dann als Freilaufdioden dieses Hochsetzstellers. Bei dieser Ausführung wird die gesteuerte variable elektrische Last 5 vorzugsweise parallel zu dem Energiespeicher 10 geschaltet, da bei einem Anschluß an die GeneratorAusgangsklemmen 4, somit parallel zu dem Schalter 12a, das Tastverhältnis des Schalters bei der Steuerung des Lastwiderstandes 5 berücksichtigt werden müsste.

In der Praxis tritt oft der Wunsch auf, die Drehzahl einer über Spul- oder Transportgut angetriebenen Welle 2 einem übergeordneten Steuergerät zur Führung bzw. Optimierung des gesamten Herstellung- bzw. Verarbeitungsprozesses zur Verfügung zu stellen. Im Rahmen der Erfindung kann eine solche Funktion dadurch realisiert werden, dass die in der Rechenschaltung 6 vorhandene Drehzahlinformation als Signal 16 aus der Rechenschaltung 6 über eine gleichfalls aus dem Energiespeicher 10 gespeiste Sendeeinrichtung 17 drahtlos an eine ferne Empfangseinrichtung 18 und weiters an ein übergeordnetes Steuergerät 19 übertragen wird. Dadurch lässt sich ein eigener zusätzlicher Drehzahlsensor vermeiden, welcher die Drehzahlinformation an das Steuergerät 19 übertragen müsste.

Eine Informationsübertragung kann jedoch auch in umgekehrte Richtung vorteilhaft bzw. wünschenswert sein, damit das übergeordnete Steuergerät 19 dadurch beispielsweise die geschilderte Drehzahl-/Drehmoment-Charakteristik einem Prozess anpassen oder adaptiv nachführen kann. Zur Übertragung von Parametern an die erfindungsgemäße Vorrichtung 1 ist es in diesem Fall vorteilhaft, an Stelle einer unidirektionalen Sendeeinrichtung 17 eine bidirektional wirkende Sende-/Empfangseinrichtung 20 zu setzen, sodass über eine Signalleitung 21 die gewünschte Programmierung bzw. Parametrierung der Rechenschaltung 6 von dem fernen übergeordneten Steuergerät 19 aus erfolgen kann. Über einen solchen Rückkanal kann beispielsweise auch die Übertragung des Programms für die Rechenschaltung 6 bei der Initialisierung des Systems erfolgen ("booten").

Aus den obigen Ausführungen und der Beschreibung verschiedener, lediglich beispielsweise genannter Ausführungen ergibt sich, dass die Erfindung eine vollständig wartungsfreie und autarke, aktive Regelung und Messung der Drehzahl einer Welle ermöglicht, ohne dass eine Kabelverbindung zur Information und/oder Energieübertragung an ein übergeordnetes Automatisierungssystem erforderlich wäre.

## Patentansprüche

1. Vorrichtung (1) zum Messen und Regeln der Drehzahl einer rotierenden mechanischen Welle, an welche ein elektrodynamischer Generator (3) gekoppelt ist,
**dadurch gekennzeichnet, dass**
der Generator (3) eine über ein Steuersignal (7) einer elektronischen Rechenschaltung (6) steuerbare, variable elektrische Last (5) speist, wobei der Wert der Last von der Rechenschaltung (6) in Abhängigkeit von der Drehzahl programmgesteuert so vorgegeben wird, dass sich an der Welle (2) eine festlegbare Drehzahl-/Drehmoment-Charakteristik einstellt, und der Generator (3) weiters unter Zwischenschaltung einer Gleichrichtereinheit (8) einen elektrischen Energiespeicher (10) speist, welcher die Vorrichtung mit elektrischer Energie versorgt.

2. Vorrichtung nach Anspruch 1, **dadurch gekennzeichnet, dass** zum Erfassen der Drehzahl der Welle (2) ein Drehzahlsensor (13) vorgesehen ist.

3. Vorrichtung nach Anspruch 1, **dadurch gekennzeichnet, dass** die Drehzahl der Welle (2) von der Ausgangsspannung (U_{G}) des Generators (3) abgeleitet ist.

4. Vorrichtung nach einem der Ansprüche 1 bis 3, **dadurch gekennzeichnet, dass** die elektronisch steuerbare Last (5) parallel zu dem Ausgang des Generators (3) und /oder parallel zu dem Energiespeicher (10) geschaltet ist.

5. Vorrichtung nach einem der Ansprüche 1 bis 4, **dadurch gekennzeichnet, dass** zwischen Gleichrichtereinheit (8) und Energiespeicher (10) ein DC/DC-Schaltwandler (11) angeordnet ist.

6. Vorrichtung nach Anspruch 5, **dadurch gekennzeichnet, dass** der DC/DC-Schaltwandler (11) als Hochsetzsteller ausgebildet ist.

7. Vorrichtung nach einem der Ansprüche 1 bis 4, **dadurch gekennzeichnet, dass** die Ausgangsklemmen (4) des Generators (3) über einen gesteuerten bidirektionalen elektronischen Schalter (12b) miteinander verbindbar sind, sodass durch periodisches des Generators (3) über diesen Schalter (12b) in Verbindung mit der inneren Induktivität des Generators im Sinne eines Hochsetzstellers ein Anheben der GeneratorAusgangsspannung für den Energiespeicher (10) erreichbar ist.

8. Vorrichtung nach einem der Ansprüche 1 bis 7, **dadurch gekennzeichnet, dass** eine Sendeeinrichtung (17) vorgesehen ist, deren Energieversorgung aus dem Energiespeicher (10) erfolgt und welcher Signale (16) der Rechenschaltung (6) zur drahtlosen Übermittlung an eine auswertende ferne Empfangseinrichtung (18) zugeführt sind.

9. Vorrichtung nach einem der Ansprüche 1 bis 8, **dadurch gekennzeichnet, dass** eine Empfangseinrichtung (20) vorgesehen ist, wobei von dieser empfangene Signale der Rechenschaltung (6) über eine Signalleitung (21) zuführbar sind.

10. Vorrichtung nach Anspruch 8 und 9, **dadurch gekennzeichnet, dass** eine Sende-Empfangseinrichtung (20) vorgesehen ist.

## Claims

1. A device (1) for measuring and regulating the rotational speed of a rotating mechanical shaft, to which an electrodynamic generator (3) is coupled
**characterised in that**
the generator (3) feeds a variable electric load (5), which can be controlled via a control signal (7) of an electronic computing circuit (6), wherein the value of the load is specified by the computing circuit (6) in a program-controlled manner according to the rotational speed, such that a definable rotational speed/torque characteristic is set on the shaft (2), and the generator (3), with interconnection of a rectifier unit (8), further feeds an electrical energy store (10), which supplies the device with electrical energy.

2. The device according to Claim 1, **characterised in that** a rotational speed sensor (13) is provided to measure the rotational speed of the shaft (2).

3. The device according to Claim 1, **characterised in that** the rotational speed of the shaft (2) is derived from the output voltage (U_{G}) of the generator (3).

4. The device according to one of Claims 1 to 3, **characterised in that** the electronically controllable load (5) is connected parallel to the output of the generator (3) and/or parallel to the energy store (10).

5. The device according to one of Claims 1 to 4, **characterised in that** a DC/DC switching converter (11) is arranged between the rectifier unit (8) and energy store (10).

6. The device according to Claim 5, **characterised in that** the DC/DC switching converter (11) is formed as a boost converter.

7. The device according to one of Claims 1 to 4, **characterised in that** the output terminals (4) of the generator (3) can be interconnected via a controlled bidirectional electronic switch (12b), and therefore the generator output voltage for the energy store (10) can be raised by periodically short-circuiting the generator (3) via this switch (12b) in conjunction with the inner inductor of the generator in the sense of a boost converter.

8. The device according to one of Claims 1 to 7, **characterised in that** a transmitting arrangement (17) is provided, to which energy is supplied from the energy store (10) and to which signals (16) of the computing circuit (6) are fed for wireless transmission to an evaluating remote receiving arrangement (18).

9. The device according to one of Claims 1 to 8, **characterised in that** a receiving arrangement (20) is provided, wherein signals received thereby can be fed to the computing circuit (6) via a signal line (21).

10. The device according to Claim B and 9, **characterised in that** a transmitting/receiving arrangement (20) is provided.

## Revendications

1. Dispositif (1) servant à mesurer et à régler la vitesse de rotation d'un arbre mécanique en rotation, auquel est couplé un générateur (3) électrodynamique,
**caractérisé en ce que**
le générateur (3) injecte une charge (5) électrique variable pouvant être commandée par l'intermédiaire d'un signal de commande (7) d'un circuit de calcul (6) électronique, sachant que la valeur de la charge est prédéfinie, par un programme, par le circuit de calcul (6) en fonction de la vitesse de rotation de telle sorte qu'une caractéristique relative à la vitesse de rotation/au couple de rotation pouvant être fixée s'ajuste au niveau de l'arbre (2), et sachant que le générateur (3) alimente un accumulateur d'énergie (10) électrique en intercalant en outre un module redresseur (8), lequel accumulateur d'énergie fournit au dispositif de l'énergie électrique.

2. Dispositif selon la revendication 1, **caractérisé en ce qu'**un détecteur de vitesse de rotation (13) est prévu pour détecter la vitesse de rotation de l'arbre (2).

3. Dispositif selon la revendication 1, **caractérisé en ce que** la vitesse de rotation de l'arbre (2) est déduite de la tension de sortie (U_{G}) du générateur (3).

4. Dispositif selon l'une quelconque des revendications 1 à 3, **caractérisé en ce que** la charge (5) pouvant être commandée de manière électronique est branchée de manière parallèle par rapport à la sortie du générateur (3) et/ou de manière parallèle par rapport à l'accumulateur d'énergie (10).

5. Dispositif selon l'une quelconque des revendications 1 à 4, **caractérisé en ce qu'**un convertisseur à découpage continu-continu (11) est disposé entre le module redresseur (8) et l'accumulateur d'énergie (10).

6. Dispositif selon la revendication 5, **caractérisé en ce que** le convertisseur à découpage continu-continu (11) est réalisé sous la forme d'un convertisseur survolteur.

7. Dispositif selon l'une quelconque des revendications 1 à 4, **caractérisé en ce que** les bornes de sortie (4) du générateur (3) peuvent être reliées entre elles par l'intermédiaire d'un commutateur (12b) électronique à commande bidirectionnelle de sorte que le fait de court-circuiter de manière périodique le générateur (3) par l'intermédiaire dudit commutateur (12b) en lien avec l'inductivité du générateur au sens d'un convertisseur survolteur permet d'atteindre une élévation de la tension de sortie du générateur pour l'accumulateur d'énergie (10).

8. Dispositif selon l'une quelconque des revendications 1 à 7, **caractérisé en ce qu'**un système d'envoi (17) est prévu, lequel se fournit en énergie auprès de l'accumulateur d'énergie (10) et auquel sont amenés des signaux (16) du circuit de calcul (6) aux fins de la transmission sans fil à un système de réception (18) procédant à des analyses à distance.

9. Dispositif selon l'une quelconque des revendications 1 à 8, **caractérisé en ce qu'**un système de réception (20) est prévu, sachant que ce dernier permet d'amener de signaux reçus au circuit de calcul (6) par l'intermédiaire d'une ligne de signaux (21).

10. Dispositif selon la revendication 8 et 9, **caractérisé en ce qu'**un système d'envoi et de réception (20) est prévu.
